# EUROPÄISCHE PATENTSCHRIFT

(11) **EP 0 947 088 B1**
(45) Veröffentlichungstag und Bekanntmachung des Hinweises auf die Patenterteilung: **01.06.2005**
(21) Anmeldenummer: 97954357.6
(22) Anmeldetag: 05.12.1997
(51) Int. Cl.: H04M 11/00, H04Q 9/00, H04L 12/26, H04Q 7/00

(54) **VORRICHTUNG UND VERFAHREN ZUR FERNDIAGNOSE, FERNÜBERWACHUNG UND FERNINITIALISIERUNG VON AUTOMATISCHEN TÜREN, TÜRANLAGEN UND TORANLAGEN**
METHOD AND DEVICE FOR TELEDIAGNOSIS, TELEMONITORING AND TELEINITIALIZATION OF AUTOMATIC DOORS, DOOR AND GATE SYSTEMS
DISPOSITIF ET PROCEDE POUR LE TELEDIAGNOSTIC, LA TELESURVEILLANCE ET LA TELEINITIALISATION DE PORTES, D'ENSEMBLES PORTES ET D'ENSEMBLES PORTAILS

(30) Priorität: 06.12.1996 DE 19650569
(43) Veröffentlichungstag der Anmeldung: 06.10.1999
(73) Patentinhaber: DORMA GmbH + Co. KG, 58256 Ennepetal (DE)
(72) Erfinder: GINZEL, Lothar, D-58239 Schwerte (DE); RESSEL, Willi, D-58454 Witten (DE); THEILE, Ulrich, D-58091 Hagen (DE)
(86) Internationale Anmeldenummer: PCT/EP1997/006801
(87) Internationale Veröffentlichungsnummer: WO 1998/025396

(56) Entgegenhaltungen:
- WO-A-94/28635
- GB-A- 2 229 022

## Beschreibung

Die vorliegende Erfindung betrifft eine Vorrichtung nach dem Oberbegriff des Patentanspruches 1.

Aus der DE 42 31 803 A1 ist ein Diagnose- und Überwachungsverfahren für eine mittels einer mikroprozessorgesteuerten, elektromotorisch betriebenen, sensorisch überwachten Tür bekannt geworden, bei der eine mit einem Mikroprozessor ausgestattete Regel- und Steuereinheit über eine serielle Schnittstelle mit einer Datenkommunikationseinheit verbunden ist. Hieran können mit entsprechender seriellen Schnittstelle ausgerüstete Geräte angeschlossen werden, z.B. ein tragbarer Computer (Laptop) oder ein Handterminal.

In der WO 94/28635 wird ebenfalls eine Vorrichtung zur Überwachung von microprozessor-überwachten Ausrüstungen wie Computern, Türen oder Spinkleranlagen beschrieben. Die Verbindung zwischen dem Microprozessor und der Kontrolleinheit erfolgt über ein Funknetz oder Handy.

Obschon in der Praxis diese Arbeitsweise Verbreitung gefunden hat, ist ein erheblicher logistischer Aufwand seitens des Service aufzuwenden. Dies liegt zum einen daran, daß dem Service ein Fehler erst dann gemeldet wird, wenn die Tür oder Türanlage eine mehr oder weniger stark eingeschränkte Funktion aufweist. Zum anderen muß der zur defekten Tür oder Türanlage beorderte Servicetechniker alle nur denkbaren Ersatzteile mitführen, da in der Regel der Fehler durch die Angaben des den Service rufenden Kunden nur wage einschätzbar bleibt. Erst vor Ort ist der Servicetechniker in der Lage, anhand der über die serielle Schnittstelle aus der Mikroprozessorsteuerung ausgelesenen Daten die betreffenden ausgefallenen Systeme zu erkennen.

Bei Großobjekten kann durch interne Nebenstellenorganisation eine einzige Amtsleitung zur Fernabfrage genutzt werden, so daß die Kosten bezogen auf die Anzahl der zu überwachenden Türen oder Türanlagen bzw. Toranlagen vernachlässigbar gering sind.

Bei kleineren und kleinen Objekten steigen jedoch die Anschlußkosten für den Unterhalt eines Telefonanschlusses unverhältnismäßig stark an. Da aber auch die in solch kleinen Objekten installierten Türen, Türanlagen und Toranlagen aufgrund der gleichartigen Funktionalität gleichartige Service-voraussetzungen haben können, kann aus Service-ökonomischen Gründen auf eine Möglichkeit der Ferndiagnose, der Fernüberwachung und/oder Ferninitialisierung nicht verzichtet werden.

Die DE 19507223 A1 beschreibt ein Funkmeldesystem, das als Fernüberwachungssystem über das Mobilfunknetz mit einer zentralen Abfragestelle verbunden ist. Dieses System dient zur permanenten Überwachung verschiedener Abfragesysteme mittels GPS und mobilem Funktelefon.

Es hat sich gezeigt, daß die Akzeptanz bei Benutzern, eine entsprechend teuere vor-Ort-Inspektion der Anlage vornehmen zu lassen, erheblich gesunken ist.

Aufgabe der Erfindung ist es daher, eine Möglichkeit zu schaffen, einen qualifizierten, preiswerten Service auch bei automatischen Türen, Türanlagen und Toranlagen in kleinen Objekten mit nur einer geringen Anzahl von Türen bis hin zu einzelnen Türen bzw. Toren gewährleisten zu können.

Die Aufgabe wird erfindungsgemäß durch die kennzeichnenden Merkmale von Patentanspruch 1 dadurch gelöst, dass der Modemadapter eine Aufnahme aufweist, in die im Servicefall als datenübertragendes Mittel ein Handy eingesteckt wird, welches den Aufbau einer Funkverbindung zur Servicezentrale initiiert, so dass bei zustandegekommener Wirkverbindung vom Standort der Tür aus in der Servicezentrale ein Diagnoseprogramm aktiviert wird, und dass dem Modemadapter eine Bildausgabevorrichtung und/oder eine Bildaufnahmevorrichtung zugeordnet ist

Hierdurch wird eine von einem fest verdrahteten, kostenpflichtigen Telefonnetzanschluß unabhängige Servicemöglichkeit geschaffen, die es erlaubt, einen Service auf höchstem Niveau auch dann bei der in Frage stehenden Tür und/oder Türanlagen bzw. Toranlagen aufrechtzuerhalten, wenn das Objekt nur eine einzige zu überwachende Tür oder ein Tor aufweist.

Der erfindungsgemäße Gegenstand wird nachfolgend beispielhaft an Türen beschrieben, wobei natürlich eine Übertragung auf Tore gleichermaßen zutrifft.

Gemäß einer vorteilhaften Ausgestaltung nach der Erfindung ist die Servicezentrale von dem Datenübertragungsmittel aus mittel- oder unmittelbar anwählbar, was die flexible Anwendung erhöht.

Hierbei ist weiter von Vorteil, wenn nach Zustandekommen der Wirkverbindung vom Standort der Tür zu der Servicezentrale in der Servicezentrale ein Diagnoseprogramm aktivierbar ist.

Der Mikroprozessorsteuerung der Antriebseinheit der Tür bzw. der Türen ist vorteilhaft ein mit der Mikroprozessorsteuerung in Wirkverbindung stehender Modemadapter zugeordnet, der zur datenübertragenden Aufnahme eines über ein Funkdatennetz anwählbaren oder selbstwählbaren - das datenübertragende Mittel verkörpernden - Funktelefon (Handy) ausgebildet ist. Es können auch entsprechende Eunkgeräte zum Einsatz gelangen. Der Benutzer kann nach seinem persönlichen Belieben ein Handy in den Modemadapter geben und die Servicenummer der Servicezentrale anwählen. Sodann wird ein mit der Servicenummer verknüpfter Service-Computer ein Diagnoseprogramm starten, welches alle Parameter der angeschlossenen Tür abfragt und analysiert. Zeichnet sich aufgrund der übermittelten Parameter ein sich verschlechternder Betriebszustand oder verminderte Betriebssicherheit ab, so wird, noch bevor an der betreffenden Tür ein Defekt auftritt, diese in einen Service-Einsatzplan eines Servicetechnikers aufgenommen, die betreffenden, zu erneuernden Bauteile oder Baugruppen zugeteilt und bereitgestellt und die Reparatur veranlaßt.

Nach einem weiteren Merkmal der Erfindung weist der Modemadapter einen Lautsprecher zwecks Ausgabe der, von der Servicezentrale an das Handy übermittelbaren Sprache auf, wobei auch ein Mikrophon zwecks Eingabe der über das Handy an die Servicezentrale übermittelbaren Sprache vorgesehen sein kann. In Problemfällen, die durch das Diagnoseprogramm nicht eindeutig gelöst werden können, können dem vor Ort tätigen Servicetechniker von einem in der Servicezentrale sitzenden Hot-Line-Spezialisten über den Lautsprecher weitere Anweisungen zur Störungsbehebung übermittelt werden, wobei der Hot-Line-Spezialist über die Funkverbindung Zugriff auf die Mikroprozessorsteuerung der Tür hat. Mit dem an dem Modemadapter angeordneten Mikrophon kann dann der Servicetechniker mit dem Hot-Line-Spezialisten verbal kommunizieren.

Ferner ist von Vorteil, wenn der Modemadapter eine Tastatur zwecks manueller Eingabe von Kommandos an den Modemadapter und/oder an die Zentralstation und/oder an die Mikroprozessorsteuerung aufweist, wodurch der Servicetechniker Parameter des Modems z. B. bei schlechter Übertragungsqualität oder der Mikroprozessorsteuerung entsprechend beeinflussen kann.

Vorteilhaft ist dem Modemadapter zwecks Darstellung der von der Servicezentrale aufgenommenen oder vorgehaltenen Bilddaten eine Bildausgabevorrichtung zugeordnet. Dies erlaubt eine sehr hohe Integration des Diagnoseprogramms, da digitalisierte Bilder oder Filmsequenzen zur Kommunikation benutzt werden können.

Ist dem Modemadapter eine Bildaufnahmevorrichtung zwecks Aufnahme der von der Tür oder Türanlage aufgenommen Bildern und Übertragung an die Servicezentrale zugeordnet, so erlaubt dies dem Hot-Line-Spezialisten sich einen eigenen Eindruck der Sachlage zu verschaffen.

Besonders einfach gestaltet sich die erfindungsgemäße Vorrichtung, wenn die Mikroprozessorsteuerung einen PCMCIA-Steckplatz aufweist, an den ein PCMCIA-Modem anschließbar ist, welches mit einem Handy verbindbar ist, wobei der Mikroprozessorsteuerung ein entsprechender PCMCIA-Steckplatz zugeordnet ist. Hierdurch kann auf standardisierte Baugruppen zurückgegriffen werden.

Nach dem erfindungsgemäßen Verfahren zur Ferndiagnose und/oder - überwachung und/oder -initialisierung einer mittels einer mikroprozessorgesteuerten, elektromotorisch betriebenen, sensorisch überwachten Tür oder Türanlage ist vorgesehen, daß im Servicefall ein Handy an die Mikroprozessorsteuerung angeschlossen wird, worauf eine Funkverbindung zu einer Servicezentrale aufgebaut wird und über die Funkverbindung von der Servicezentrale aus die Ferndiagnose und/oder -überwachung und/oder - initialisierung der Mikroprozessorsteuerung erfolgt. Dies kann z.B. im Rahmen eines turnusmäßigen Rundganges des Hausmeisters erfolgen, wobei die Funkverbindung vom Handy aus initiierbar ist. Sobald die Funkverbindung aufgebaut ist wird in der Servicezentrale ein Diagnoseprogramm ausgeführt, welches die Parameter der Mikroprozessorsteuerung analysiert, wobei bei sich änderndem Betriebszustand oder sinkender Betriebssicherheit, die betreffende Tür z.B. mit einer Auftragsnummer als Serviceauftrag in den Service-Einsatzplan eines Servicetechnikers aufgenommen werden.

Ist aber der bestehende Defekt durch eine einfache Maßnahme vor Ort, etwa durch Eingabe bestimmter Kommandos über die Tastatur, behebbar, so kann das Diagnoseprogramm sofort entsprechende sprachausgabegestütze Hinweise über den Lautsprecher, oder bei vorhandener Bildausgabevorrichtung entsprechende Bildsequenzen zur Fehlerbehebung übertragen.

Hierdurch wird eine hohe Flexibilität geschaffen, welche die Unterhaltskosten auch bei kleinen Objekten mit wenigen zu überwachenden Türen deutlich senkt.

Durch den gezielten Einsatz der erfindungsgemäßen Vorrichtung wird das Technik-Personal entlastet. Darüber hinaus weiß jeder Servicetechniker, was ihn am Zielort erwarten wird, da nach einem weiteren Verfahrensmerkmal zum betreffenden Serviceauftrag die zu erneuernden Ersatzteile zugeteilt und terminrichtig bereitgestellt werden. Und selbst wenn einmal Überraschungen auftreten, kann er ohne weitere Hilfsmittel auf die Hot-Line-Spezialisten in der Servicezentrale zurückgreifen.

Die Erfindung wird anhand eines in den Figuren mehr oder minder schematisch dargestellten möglichen Ausführungsbeispiels näher erläutert. Es zeigen:
- Figur 1:: Eine Vorrichtung nach der Erfindung
- Figur 2:: ein Systemschaubild der Funktionsweise der Vorrichtung nach Figur 1,
wobei gleiche Teile mit gleichen Bezugsziffern bezeichnet sind.

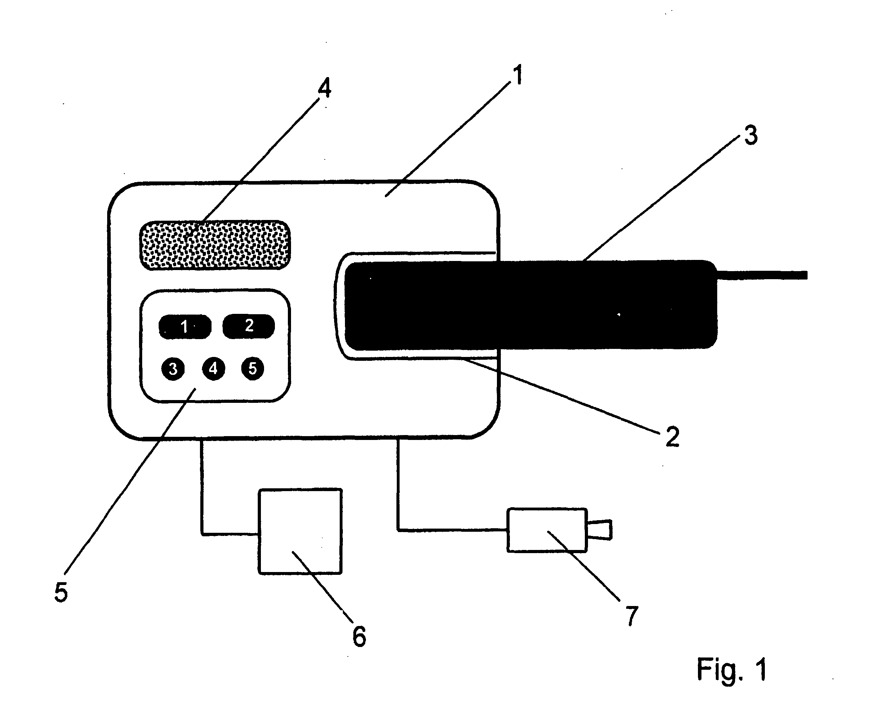

Aus Figur 1 ist ein, einer - da nicht zur Erfindung gehörend nicht dargestellten - Mikroprozessorsteuerung zugeordneter und wirkungsmäßig mit dieser verbundener Modemadapter 1 gezeigt.

Der Modemadapter 1 weist eine Aufnahme 2 für ein Datenübertragungsmittel, vorzugsweise ein Handy 3 auf, das mit einem Verbindungsstecker in ein entsprechendes Steckergegenstück des Modemadapters 1 elektrisch zusammenwirkt. Erfindungsgemäß ist es auch denkbar, einen Akustikkoppler einzusetzen. Ferner ist der Modemadapter 1 mit einen Lautsprecher 4 und einer Tastatur 5 ausgestattet. Mittels der Tastatur 5 kann der Servicetechniker vorbestimmbare Funktionen der Tür oder Türanlage zu Testzwecken bedienen. Auch kann er mit einer der Tasten den Lautsprecher zuschalten, so daß er verbale Hinweise der Servicezentrale während seiner Tätigkeit erhalten kann.

Es kann auch ein nicht dargestelltes Mikrofon vorgesehen werden, mit dem der Servicetechniker seinerseits verbalen Kontakt mit der Servicezentrale aufnehmen kann, um z.B. bei überraschend auftretenden Problemen sofort kompetente Unterstützung anzufordern.

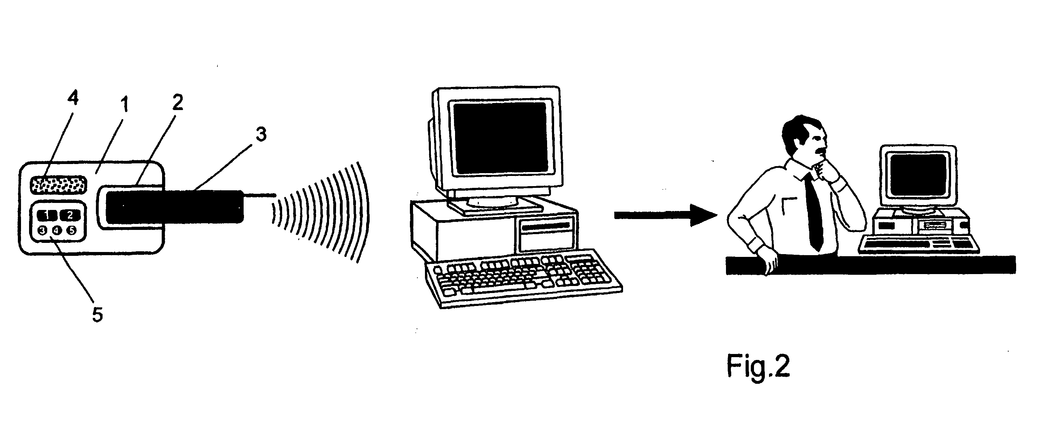

Figur 2 zeigt den Ablauf einer Diagnose mit Sprachausgabe. Mittels des in den Modemadapter 1 eingeführten Handies 3 wird über ein Funknetz, z.B. der Telekom oder einem anderen Funknetzbetreiber die Servicezentrale angewählt, wo ein Modem den eingehenden Anruf an einen PC weiterleitet. Auf dem PC ist ein Diagnoseprogramm installiert, welches sprachgestützte Diagnoseführung aufweist. Ist das Diagnoseprogramm nicht in der Lage, die Parameter zu analysieren, so wird der Hot-Line-Spezialist durch betätigen einer entsprechenden Taste der Tastatur 5 zugezogen. Dieser kann dann über die Sprachverbindung weitere Hinweise zur Fehlerbehebung geben. So kann der Servicetechniker auch bei unvorhergesehenen Fehlerzuständen unmittelbar die betreffende Tür wieder in den ordnungsgemäßen Betriebszustand bringen.

Etwa 90 % aller Diagnosen und Initialisierungen können durch das Diagnoseprogramm erfolgen. Lediglich bei etwa 10 % aller Service-Kontakte muß ein Hot-Line-Spezialist zugezogen werden.

Wie weiter aus Figur 1 ersichtlich ist, ist dem Modemadapter 1 eine Bildausgabevorrichtung 6 zugeordnet. Diese kann von dem Hot-Line-Spezialisten in der Servicezentrale oder direkt von dem Diagnoseprogramm genutzt werden, um neben verbalen Daten auch Bildaten zu übertragen.

Ferner ist dem Modemadapter 1 eine Bildaufnahmevorrichtung 7 zugeordnet, die, an sinnvollem Ort im Bereich der Tür vorgesehen und an den Modemadapter 1 anschließbar, dem Hot-Line-Spezialisten die visuelle Begutachtung der Tür oder Türanlage oder dem Servicetechniker die visuelle Kommunikation mit ihm gestattet.

Der Modemadapter 1 kann aber auch in PCMICA-Technologie ausgeführt sein. Der Mikroprozessorsteuerung ist dann ein entsprechender PCMICA-Steckplatz zugeordnet, an den ein PCMCIA-Modem anschließbar ist, welches mit dem Handy 3 verbindbar ist. Die Bildausgabevorrichtung 6 und die Bildaufnahmevorrichtung 7 sind dann selbstverständlich mittelbar über die Mikroprozessorsteuerung dem Modemadapter 1 zugeordnet.

Im weiteren soll die Art und Weise einer Ferndiagnose und/oder -überwachung und/oder -initialisierung einer mittels der mikroprozessorgesteuerten, elektromotorisch betriebenen, sensorisch überwachten Tür oder Türanlage beispielhaft erläutert werden.

Zunächst wird das Handy 3 über den Modemadapter 1 an die nicht dargestellte Mikroprozessorsteuerung angeschlossen. Hierauf wird eine Funkverbindung mit der Servicezentrale aufgebaut, wobei der Aufbau der Funkverbindung zur Servicezentrale vom Handy aus initiiert wird. Es ist aber auch die Initiierung von der Servicezentrale aus möglich. Über die Funkverbindung erfolgt dann von der Servicezentrale aus die Ferndiagnose und/oder -überwachung und/oder -initialisierung der Mikroprozessorsteuerung. In der Regel wird nach Aufbau der Funkverbindung vorab das Diagnoseprogramm ausgeführt, welches die Parameter der Mikroprozessorsteuerung analysiert. Entsprechend der konkreten Sachlage der Analyse kann das Diagnoseprogramm eine Fernüberwachung oder auch eine Ferninitialisierung vornehmen, etwa bei einer Versions-Änderungen des i.d.R. in einem EPROM abgelegten Mikroprozessorprogrammes dessen Überschreibung.

Stellt das Diagnoseprogramm fest, daß sich der Betriebszustand verändert hat oder die Betriebssicherheit sinkt, wird der Standort der betreffenden Tür als Serviceauftrag in den Service-Einsatzplan eines Servicetechnikers aufgenommen.

In dem Serviceauftrag sind eine Fehlerbeschreibung bzw. -analyse, ein Reparaturplan sowie entsprechende Ersatzteile und Hilfsmittel aufgeführt. Dem betreffenden Serviceauftrag werden die zu erneuernden Ersatzteile zugeteilt und terminrichtig bereitgestellt, so daß der Servicetechniker alle für eine erfolgreiche Reparatur oder Wartung erforderlichen Informationen und Hilfsmittel - wie etwa Spezialwerkzeuge - vor Antritt der Reise zur Verfügung hat.

### Bezugszeichen

- 1: Modemadapter
- 2: Aufnahme
- 3: Handy
- 4: Lautsprecher
- 5: Tastatur
- 6: Bildausgabevorrichtung
- 7: Bildaufnahmevorrichtung

## Patentansprüche

1. Vorrichtung zur Ferndiagnose und/oder -überwachung und/oder - initialisierung einer mikroprozessorgesteuerten, elektromotorisch betriebenen Tür, Türanlage oder Toranlage, bei der einer Mikroprozessorsteuerung ein Modemadapter (1) mit einer Tastatur (5) zwecks manueller Eingabe von Kommandos an den Modemadapter (1) und/oder an die Servicezentrale und/oder an die Mikroprozessorsteuerung zugeordnet ist, **dadurch gekennzeichnet, dass** der Modemadapter (1) eine Aufnahme (2) aufweist, in die im Servicefall als datenübertragendes Mittel ein Handy (3) eingesteckt wird, welches derart ausgebildet ist, um den Aufbau einer Funkverbindung zur Servicezentrale zu initiieren, um bei zustandegekommener Wirkverbindung vom Standort der Tür aus in der Servicezentrale ein Diagnoseprogramm zu aktivieren, und dass dem Modemadapter (1) eine Bildausgabevorrichtung (6) und/oder eine Bildaufnahmevorrichtung (7) zugeordnet ist.

2. Vorrichtung nach Anspruch 1, **dadurch gekennzeichnet, daß** der Modemadapter (1) einen Lautsprecher (4) zwecks Ausgabe der von der Servicezentrale an das Handy (3) übermittelbaren Sprache aufweist.

3. Vorrichtung nach Anspruch 1 oder 2, **dadurch gekennzeichnet, daß** der Modemadapter (1) ein Mikrophon zwecks Eingabe von über das Handy an die Servicezentrale übermittelbarer Sprache aufweist..

4. Vorrichtung nach Anspruch 1, **dadurch gekennzeichnet, daß** der Modemadapter (1) ein mit dem Handy verbindbares PCMCIA-Modem ist, wobei der Mikroprozessorsteuerung ein entsprechender PCMCIA-Steckplatz (2) zugeordnet ist.

## Claims

1. A device for a remote diagnosis and/or a remote monitoring and/or a remote initialization of a microprocessor controlled, electric motor driven door, door set or gate set, in which a modem adapter (1) including a key pad (5), for manually keying in commands to the modem adapter (1) and/or to the service control centre and/or to the microprocessor control, is assigned to the microprocessor control, **characterized in that** the modem adapter (1) presents a receptacle (2), into which, as a data-transmitting means, a handheld telephone (3) is inserted in the event of a service situation, which telephone is configured to initiate the establishment of a radio communication to the service control centre, in order to activate a diagnosis program in the service control centre from the location of the door, provided that an operative connection is established, and **in that** an image output device (6) and/or an image recording device (7) is assigned to the modem adapter (1).

2. A device according to claim 1, **characterized in that** the modem adapter (1) presents a loudspeaker (4) for outputting speech, which is transferable from the service control centre to the handheld telephone (3).

3. A device according to claim 1 or 2, **characterized in that** the modem adapter (1) presents a microphone for speech input, which is transferable via the handheld telephone to the service control centre.

4. A device according to claim 1, **characterized in that** the modem adapter (1) consists of a PCMCIA-modem, which is connectable to the handheld telephone, the microprocessor control being assigned to a corresponding PCMCIA-slot (2).

## Revendications

1. Dispositif de télédiagnostic et/ou de télésurveillance et/ou d'initialisation à distance d'une porte, d'une installation de portes ou d'une installation de portails, qui sont commandées par microprocesseur et actionnées par moteur électrique, dans lequel un adaptateur de modem (1) avec un clavier (5), pour pouvoir entrer manuellement des commandes à destination de l'adaptateur de modem (1) et/ou de la centrale de service et/ou de la commande par microprocesseur, est associé à la commande par microprocesseur, **caractérisé en ce que** l'adaptateur de modem (1) présente un réceptacle (2), dans lequel un téléphone portable (3) est placé comme moyen de transmission de données en cas de service, ledit téléphone étant configuré de façon à initier l'établissement d'une radiocommunication vers la centrale de service, en vue d'activer un programme de diagnostic, sous condition d'avoir établi une communication active dans la centrale de service depuis l'endroit de la porte, et **en ce qu'**un dispositif d'affichage d'images (6) et/ou un dispositif d'enregistrement d'images (7) sont associés à l'adaptateur de modem (1).

2. Dispositif selon la revendication 1, **caractérisé en ce que** l'adaptateur de modem (1) présente un haut-parleur (4) pour la sortie vocale qui est transférable depuis la centrale de service au téléphone portable (3).

3. Dispositif selon la revendication 1 ou 2, **caractérisé en ce que** l'adaptateur de modem (1) présente un microphone pour l'entrée vocale qui est transférable par l'intermédiaire du téléphone portable à la centrale de service.

4. Dispositif selon la revendication 1, **caractérisé en ce que** l'adaptateur de modem (1) consiste en un modem PCMCIA qui est connectable au téléphone portable, un connecteur d'extension (2) PCMCIA correspondant étant associé à la commande par microprocesseur.
